Europäisches Patentamt

European Patent Office

Office européen des brevets

(19)

(11) Numéro de publication : **0 201 946 B1**

# FASCICULE DE BREVET EUROPEEN

(12)

(45) Date de publication du fascicule du brevet :
09.01.91 Bulletin 91/02

(51) Int. Cl.⁵ : **G01S 13/60**

(21) Numéro de dépôt : 86200476.9

(22) Date de dépôt : 21.03.86

(54) **Dispositif pour mesurer la vitesse de défilement d'une surface.**

(30) Priorité : 29.03.85 FR 8504823

(43) Date de publication de la demande :
20.11.86 Bulletin 86/47

(45) Mention de la délivrance du brevet :
09.01.91 Bulletin 91/02

(84) Etats contractants désignés :
**DE FR GB IT SE**

(56) Documents cités :
**US-A- 2 406 358**
**US-A- 3 594 793**

(73) Titulaire : **TELECOMMUNICATIONS RADIOELECTRIQUES ET TELEPHONIQUES T.R.T.**
**88, rue Brillat Savarin**
**F-75013 Paris (FR)**
**FR**
Titulaire : **N.V. Philips' Gloeilampenfabrieken**
**Groenewoudseweg 1**
**NL-5621 BA Eindhoven (NL)**
**DE GB IT SE**

(72) Inventeur : **Magne, François**
**SOCIETE CIVILE S.P.I.D. 209 rue de l'Université**
**F-75007 Paris (FR)**

(74) Mandataire : **Chaffraix, Jean et al**
**Société Civile S.P.I.D. 156, Boulevard Haussmann**
**F-75008 Paris (FR)**

EP 0 201 946 B1

## Description

La présente invention concerne un dispositif pour mesurer la vitesse de défilement d'une surface placée à une distance par rapport à lui, dispositif comportant un circuit émetteur pour diriger au moyen d'une antenne d'émission une onde vers cette surface, un circuit récepteur pour recevoir au moyen d'au moins une antenne de réception l'onde renvoyée par la surface et un circuit de traitement de l'onde renvoyée pour fournir l'indication de la vitesse.

Un tel dispositif peut trouver d'importantes applications notamment en radionavigation pour mesurer la vitesse horizontale d'un aéronef dans lequel le dispositif est installé, la surface considérée étant alors le sol. D'autres applications peuvent être trouvées en textile où souvent l'on a besoin en cours de fabrication de déterminer la vitesse de défilement d'une pièce de tissu.

Dans le brevet US 2406 358 on décrit un système qui fonctionne à impulsion. La vitesse de défilement est obtenue à partir d'une lecture sur un oscilloscope en synchronisant la vitesse de balayage.

La présente invention propose donc un dispositif du genre cité dans le préambule qui ne nécessite pas la présence de réglage ni d'oscilloscope et qui donne pour un grand confort de l'utilisateur, une mesure fiable de la vitesse.

Pour cela, un dispositif pour mesurer la vitesse de défilement d'une surface est remarquable en ce que le circuit récepteur est associé à une seule antenne de réception pour fournir un signal de réception, en ce que le circuit de traitement est muni de deux branches l'une dite branche directe pour appliquer le signal de réception à une entrée d'un organe de multiplication, l'autre dite branche retardatrice pour appliquer le signal de réception à l'autre entrée de l'organe de multiplication après lui avoir apporté un retard $t_0$ compté par rapport à la branche directe, un organe d'estimation de la fréquence du signal de sortie de l'organe de multiplication et un organe de calcul pour fournir l'indication de vitesse à partir du signal de sortie de l'organe d'estimation et de la distance.

La description suivante faite en regard des dessins annexés, le tout donné à titre d'exemple non limitatif fera bien comprendre comment l'invention peut être réalisée.

La figure 1 montre un dispositif pour mesurer la vitesse de défilement conforme à l'invention.

La figure 2 est un schéma pour mettre en évidence certains paramètres utiles à connaître pour l'explication du fonctionnement du dispositif montré à la figure 1.

La figure 3 est un schéma d'explication du fonctionnement du dispositif montré à la figure 1.

Les figures 4a, 4b et 4c montrent les structures possibles pour les branches directes et retardataires.

Les figures 5, 6 et 7 montrent différentes manières de connecter les branches directes et retardataires pour des signaux en quadrature.

Les figures 8, 9 et 10 montrent des exemples de réalisation de l'organe d'estimation de fréquence.

La figure 11 montre la structure d'un circuit de préfiltrage.

La figure 12 montre la structure d'un élément faisant partie du circuit de préfiltrage.

Les figures 13a, 13b, 13c et 13d sont des schémas montrant le fonctionnement du circuit de préfiltrage de la figure 11.

La figure 14 montre la structure d'un circuit de préfiltrage pour signaux en quadrature.

La figure 15 montre le détail d'un élément faisant partie du circuit de préfiltrage de la figure 11.

La figure 16 montre la coopération d'un radioaltimètre avec un dispositif de l'invention.

La figure 17 représente un schéma préféré de réalisation d'un dispositif conforme à l'invention.

La figure 18 est un ordinogramme montrant le programme de fonctionnement du dispositif de la figure 17.

La figure 19 est un ordinogramme montrant le programme d'interruption du dispositif de la figure 17.

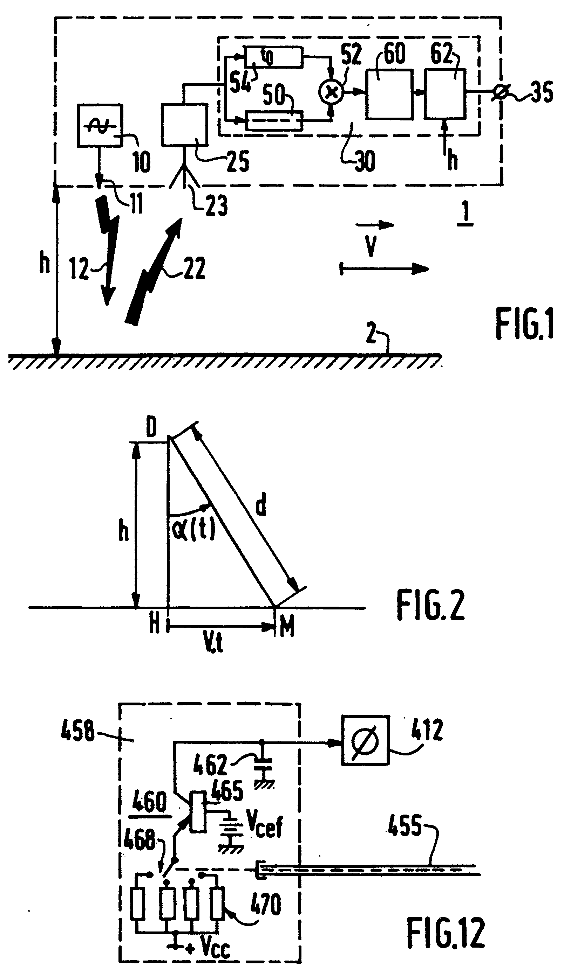

Sur la figure 1, la référence 1 indique le dispositif, objet de l'invention, pour mesurer la vitesse de défilement V. Dans l'exemple décrit c'est le dispositif 1 qui se déplace par rapport à la surface 2. On se place donc plus particulièrement dans le cas où le dispositif est à bord d'un aéronef et où l'on cherche à mesurer la vitesse horizontale V de celui-ci. L'altitude par rapport au sol 2 a pour valeur "h". Cette valeur est déterminée par des moyens qui seront explicités par la suite.

Le dispositif 1 comporte tout d'abord un circuit émetteur 10 associé à une antenne 11 pour émettre vers la surface du sol 2, une onde 12 ; cette onde est réfléchie par le sol qui se comporte, en général, comme une surface diffusante. Cette onde est captée par l'antenne de réception 23 puis est convenablement traitée par le circuit récepteur 25 pour subir un changement de fréquence et être amplifiée. Le circuit de traitement 30 qui suit, fournit sur une borne 35 l'indication de la vitesse V.

Conformément à l'invention le circuit récepteur est associé à une seule antenne (l'antenne 23), le circuit de traitement 30 est muni de deux branches une branche dite directe portant la référence 50 destinée à appliquer le signal de réception disponible à la sortie du circuit récepteur 25 vers un organe de multiplication

2

52 ; une deuxième branche dite branche retardatrice portant la référence 54 est destinée à appliquer ce même signal de réception à l'autre entrée de l'organe de multiplication 52, après avoir apporté un retard $t_0$ compté par rapport à la branche directe. A la sortie de l'organe de multiplication 52 est prévu un organe d'estimation de fréquence 60 et enfin un organe de calcul 62 pour fournir l'indication de vitesse à partir du signal de sortie de l'organe d'estimation 60 et de l'altitude "h" ; le circuit émetteur 10 est constitué par un oscillateur à fréquence fixe.

L'invention est basée sur les considérations suivantes :

A la figure 2, le point D représente l'emplacement du dispositif situé à une hauteur "h" à l'aplomb d'un point H de la surface 2. On considère un point de réflexion M de la surface. Ce point est situé à une distance "d" de D. L'onde émise E(t) au point D a pour fréquence $f_0$ et peut s'écrire :

$$E(t) = A \sin(2\pi f_0 \cdot t)$$

L'onde reçue R(t) après réflexion au point M s'écrit alors :

$$R(t) = a \sin[2\pi f_L \cdot (t - \frac{2d}{c}(t)) + \varphi] \quad (1)$$

où $\varphi$ est une constante

où c est la vitesse de la lumière

où $f_L$ est la fréquence porteuse obtenue après changement de fréquence dans le récepteur 25.

L'organe de multiplication 52 fournit un signal z(t) en négligeant les composantes à fréquence double.

$$z(t) = R(t).R(t - t_0) = k \cos[2\pi f_L]\left[t_0 + \frac{2}{c}(d(t-t_0) - d(t))\right]$$

où k est une constante.

Si on considère le triangle DHM à la figure 2 on peut écrire en utilisant le théorème de Pythagore :

$$d = \sqrt{h^2 + V^2.t^2}$$

Si on admet $\alpha(t)$ petit :

$$(2) \qquad d(t) = h\left[1 + \frac{1}{2}\frac{V^2t^2}{h^2} + \ldots\right]$$

et alors

$$d(t) - d(t - t_0) = \frac{V^2t_0^2}{2h} - \frac{V^2t_0}{h} +$$

d'où l'expression z(t) :

$$z(t) = k\cos\left[2\pi f_L(t_0 + \frac{V^2 t_0^2}{hc} - \frac{2V^2 t_0}{ch} t)\right]$$

$$= k\cos(- 4\pi f_L \frac{V^2 t_0}{hc}.t + 2\pi f_L t_0 + 2\pi f_L . \frac{V^2 t_0^2}{hc})$$

$$(3) \quad z(t) = k\cos[\Omega t + \varphi]$$

En mesurant $\Omega$ il est donc possible de déterminer la vitesse V.

$$(4) \quad V = \sqrt{\Omega . \frac{hc}{4\pi f_L . t_0}}$$

Il convient cependant de considérer le cas, plus proche de la réalité, où plusieurs réflecteurs (N) sont présents ; l'onde reçue est la superposition de N ondes d'amplitude $a_i$ et s'écrit alors :

$$R(t) = \sum_{i=1}^{N} a_i \sin 2\pi f_0 . (t - \frac{2d_i(t)}{c} + \varphi)$$

d'où

$$z(t) = \sum_{i=1}^{N} \sum_{j=1}^{N} a_i(t) \, a_j(t - t_0)$$

$$x \cos\left[2\pi f_L . \left[t_0 + \frac{2}{c} (d_j(t-t_0) - d(t))\right]\right]$$

Si l'on suppose les réflecteurs répartis de manière aléatoire sur le sol, la contribution apportée au spectre du signal z(t) par les différences $d_j - d_i$ avec i # j est de nature aléatoire tandis que la contribution des différences $i(t-t_0) - d_i(t)$ construit la même fréquence $\Omega$.

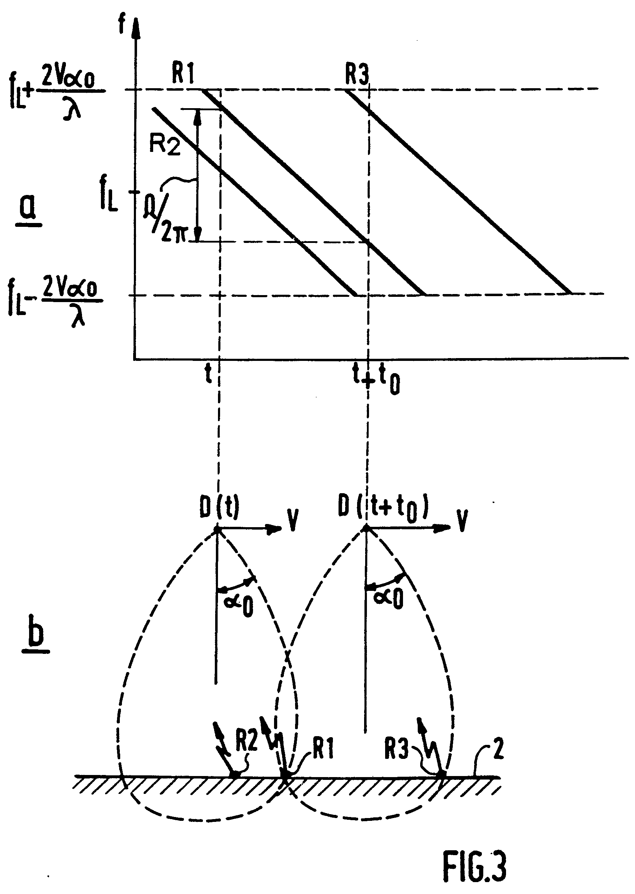

La figure 3 représente en a en fonction du temps l'évolution de la fréquence du signal à la sortie du circuit récepteur 25. Pour simplifier la représentation, on a dessiné seulement trois traits relatifs à trois points diffuseurs R1, R2 et R3 disposés sur le sol 2 comme cela est indiqué en b sur la figure 3. On admet que la surface 2 est vue de l'antenne 23 sous un angle $\alpha_0$ qui est situé de part et d'autre de la verticale, et qui correspond à son diagramme de rayonnement. Ainsi la fréquence du signal reçu au niveau de la sortie du circuit récepteur ne peut évoluer que d'une fréquence allant

d'une valeur égale à $f_L + \frac{2V\alpha_0}{\lambda}$ (où l'on suppose que

$\sin\alpha_0 \approx \alpha_0$) à $f_L - \frac{2V\alpha_0}{\lambda}$. Cette évolution est linéaire comme le montre la relation (1) compte tenu de la relation (2).

Sur la figure 3 en b on a représenté par les points D(t) et D(t + $t_0$) deux emplacements du dispositif 1 de l'invention en des instants séparés de la durée $t_0$. Ainsi en D(t) les points diffuseurs R1 et R2 sont vus par l'antenne 23 et en D(t + $t_0$) les points R2 et R3. Ainsi la différence d'ordonnée pour chacun des traits R1, R2 et R3 montrés à la figure 3 en a est toujours constante pour des différences d'abscisse égales à $t_0$: cette valeur est donc $\Omega/2\pi$ (voir formule (3)).

La figure 3 montre bien les exigences contradictoires imposées à la valeur $t_0$. D'une part, il faut $t_0$ élevée pour que l'erreur sur $\Omega$ soit faible. Mais si on prend une valeur $t_0$ trop élevée on ne peut plus voir le même

4

point et il n'y a plus de corrélation entre les signaux à la sortie des branches 50 et 54. Les valeurs à choisir pour $t_0$ seront discutées dans la suite du présent mémoire.

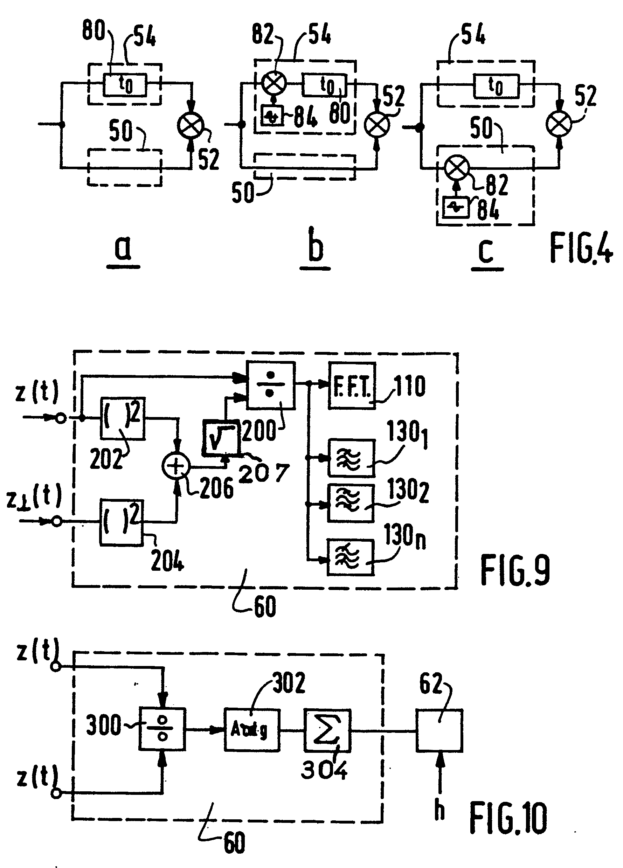

La figure 4 montre les différentes manières de réaliser les branches 50 et 54. En <u>a</u> la branche 54 est constituée par une ligne à retard 80 amenant le retard $t_0$ requis alors que la branche 50 est constituée par une liaison directe. Comme les spectres des signaux sont assez étendus en fréquence et que l'on veut éviter l'apparition de signaux parasites dus aux battements intempestifs des différentes composantes du spectre, ces battements étant apportés notamment par les non-linéarités de l'organe 52, on dissocie le spectre des signaux de la branche retardatrice 54 de celui des signaux de la branche directe 50. Pour cela, on utilise un modulateur 82 coopérant avec un oscillateur de déplacement 84 inséré soit dans la branche retardatrice 54 comme cela est montré en <u>b</u> à la figure 4, soit dans la branche directe comme cela est montré en <u>c</u> de cette même figure 4.

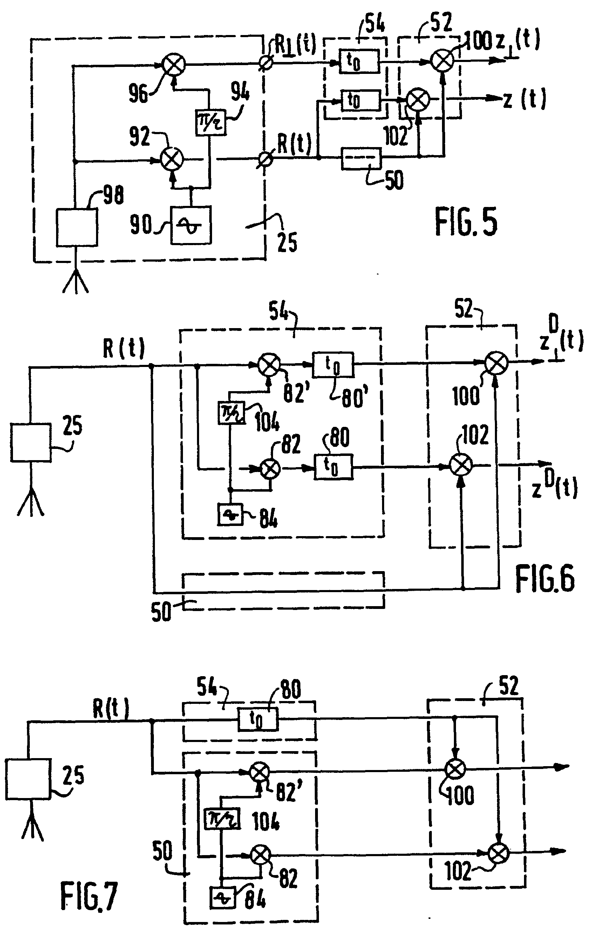

La figure 5 montre le cas où le circuit récepteur 25 est du type fournissant deux signaux en quadrature c'est-à-dire deux signaux R(t) et R⊥(t) pouvant s'écrire :

$$R(t) = a \sin\left[2\pi f_L.(t - \frac{2d(t)}{c}) + \varphi\right]$$

$$R\bot(t) = a \cos\left[2\pi f_L.(t - \frac{2d(t)}{c}) + \varphi\right]$$

ceci peut être obtenu par un oscillateur local 90 fournissant ses signaux d'une part, directement, à un mélangeur 92 et d'autre part, par l'intermédiaire d'un déphaseur de $\pi/2$ 94, à un autre mélangeur 96, les mélangeurs étant, par ailleurs, connectés à la sortie d'un circuit de prétraitement de réception 98.

Dans ce cas la branche retardatrice 54 est doublée de façon à retarder les signaux R(t) et R⊥(t) tandis que la branche directe est simple et permet de transmettre directement le signal R(t) à l'organe de multiplication 52 formé ici de deux multiplicateurs 100 et 102. Le multiplicateur 100 reçoit sur ses entrées respectivement les signaux R⊥($t-t_0$) et R(t) et le multiplicateur 102 les signaux R($t-t_0$) et R(t). Ils fournissent donc respectivement les signaux z(t) et Z⊥(t) :

z(t) = k cos($\Omega t + \Phi$)

z⊥(t) = k sin($\Omega t + \Phi$)

Les signaux en quadrature permettent un traitement meilleur pour déterminer $\Omega$.

Les signaux z(t) et z⊥(t) peuvent être élaborés d'une manière différente montrée à la figure 6.

Le signal R(t) issu du récepteur 25 est appliqué d'une part à la branche directe 50 et d'autre part à la branche retardatrice 54 du type montré en <u>b</u> à la figure 4, comportant un oscillateur de déplacement 84. Ici, à cet oscillateur 84 on rattache un déphaseur 104 qui est connecté à un modulateur supplémenteur 82′ et dont la sortie est reliée à une ligne à retard 80′. Les sorties des lignes de retard 80 et 80′ sont reliées à des entrées des multiplicateurs 102 et 100, les autres entrées de ces multiplicateurs recevant le signal R(t). Il convient de remarquer que les signaux zᴰ⊥(t) et Zᴰ(t) fournis par le montage de la figure 6 sont différents des signaux z⊥(t) et z(t) :

zᴰ⊥(t) = k sin[$(\Omega + \omega)t + \Phi$]

zᴰ(t) = k cos[$(\Omega + \omega)t + \Phi$]

une constante $\omega$ étant introduite pour définir l'influence du décalage en fréquence apporté par l'oscillateur 84.

Il va de soi que l'ensemble des éléments 82, 82′, 84 et 104 peut être inséré dans la bande directe alors que la branche retardatrice ne comporte qu'une seule ligne de retard 80 à la sortie de laquelle est reliée l'une des deux entrées des multiplicateurs 100 et 102, les sorties des modulateurs 82 et 82′ étant respectivement connectées directement à l'autre entrée des organes 100 et 102.

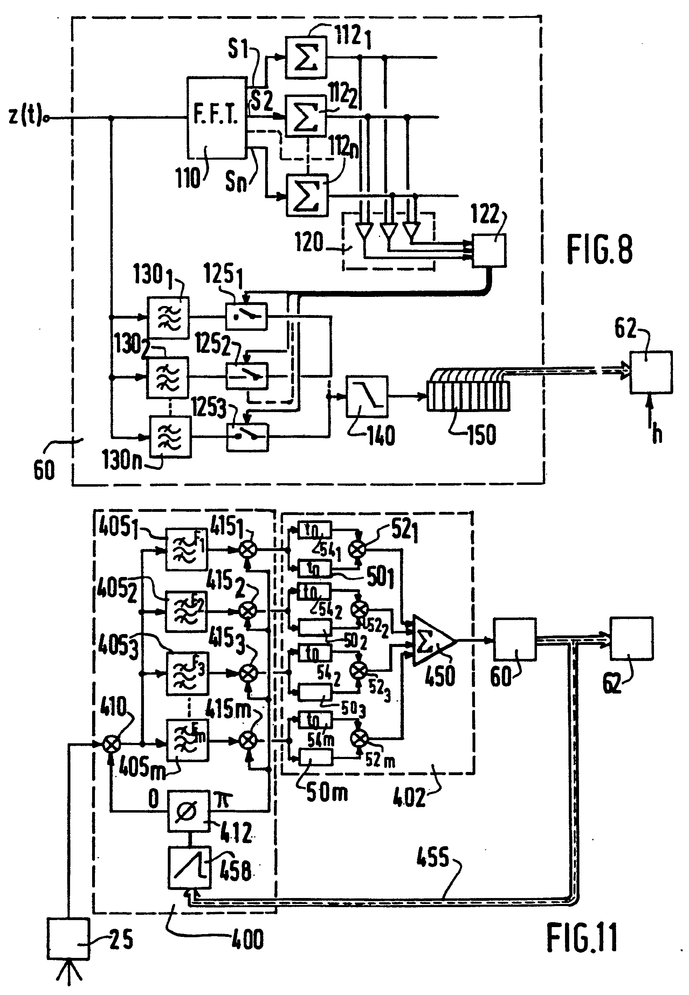

A la figure 8, on a représenté un premier exemple de réalisation d'un organe d'estimation de fréquence 60 convenant pour l'invention. Il se compose tout d'abord d'un transformateur de Fourier 110 qui fournit sur ses différentes sorties S1, S2,...Sn des signaux représentant les composantes de fréquences du signal z(t). Ces signaux de composantes sont accumulés dans les accumulateurs $112_1$, $112_2$,...., $112_n$ qui fournissent un signal de somme d'un certain nombre de signaux de composantes récemment élaborés par le transformateur 110. Un ensemble de comparateurs 120 compare deux à deux les signaux de sortie des accumulateurs 112. Un circuit de logique 122, à partir des informations fournies par l'ensemble 120, fournit un signal de fermeture pour l'un des interrupteurs $125_1$, $125_2$,...., $125_n$. Ainsi c'est le signal de plus forte ampli-

5

tude qui, après être détecté comme tel par l'ensemble 120 et le circuit 122, détermine la fermeture de l'un de ces interrupteurs. Ces interrupteurs permettent l'insertion de filtres passe-bande $130_1$, $130_2$,..., $130_n$ prévus pour filtrer le signal z(t). Le signal de sortie du filtre est appliqué, si l'interrupteur qui lui est rattaché est fermé, à un détecteur de passage par zéro 140. Le signal de sortie de ce détecteur est appliqué à un compteur 150 monté en fréquencemètre. Ce sont les informations de sortie prises en parallèle sur ce compteur qui déterminent la fréquence du signal z(t) et qui sont utilisées par l'organe 62 pour fournir V en appliquant la formule (4).

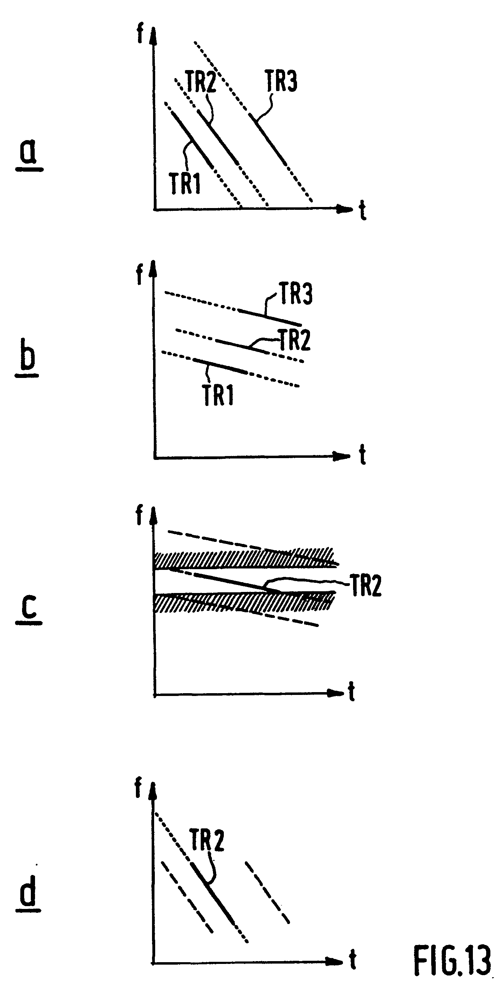

La figure 9 montre la manière dont est modifié l'organe d'estimation de la fréquence 60 représenté sur la figure 8 pour pouvoir s'adapter au couple de signaux z(t) et z⊥(t). A la figure 9 le signal z(t) est appliqué d'une part à un circuit diviseur 200 et d'autre part à un circuit élévateur à la puissance 2 portant la référence 202, tandis que le signal z⊥(t) est appliqué seulement à un circuit élévateur 204 de même fonction que le circuit 202. Les signaux de sortie de ces circuits 202 et 204 sont appliqués à un organe de sommation 206. Le signal de sortie de l'organe 206 est appliqué au circuit diviseur 200 après passage dans un circuit 207 extracteur de racine carrée. Le signal de sortie de ce circuit diviseur est appliqué au transformateur 110 et aux filtres $130_1$, $130_2$,..., $130_n$. Le reste de l'organe 60 est identique à celui décrit à la figure 8. On remarquera que le signal à la sortie du diviseur 200 peut s'écrire : $k \cos(\Omega t + \Phi)/[k^2 \cos^2(\Omega t + \Phi) + k^2 \sin^2(\Omega t + \Phi)]^{1/2} = \cos(\Omega t + \Phi)$ l'amplitude du signal est alors normalisée.

Une autre manière de traiter les signaux z(t) et $z_1⊥(t)$ est représentée à la figure 10. Un diviseur 300 divisant le signal z⊥(t) par le signal z(t) fournit un signal de forme $tg(\Omega t + \Phi)$ de sorte qu'un calculateur d'Arctg 302 fournit une indication sur la fréquence $\Omega$. Avant d'appliquer ce signal à l'organe 62 on effectue une accumulation par l'accumulateur 304 des derniers résultats fournis par le calculateur 302.

La figure 11 représente un dispositif conforme à l'invention dans lequel on a prévu en outre un circuit de préfiltrage 400 disposé en amont de l'organe d'estimation de fréquence 60. La présence de ce circuit de préfiltrage impose en outre un réseau de branches directe et retardatrice 402 connecté à sa sortie. L'entrée de ce circuit de préfiltrage est connectée à la sortie du circuit récepteur 25. Il se compose d'une série de "m" filtres passe-bande $405_1$, $405_2$, $405_3$,..., $405_m$ pour des fréquences respectives $F_1$, $F_2$, $F_3$,..., $F_m$. Les entrées de tous ces filtres sont connectées à la sortie d'un circuit mélangeur 410 à deux entrées dont une est reliée à la sortie du circuit récepteur 25 et l'autre à la sortie 0 d'un oscillateur à commande par tension 412.

Chaque sortie des filtres $405_1$, $405_2$, $405_3$,..., $405_m$ est reliée à l'entrée d'un circuit mélangeur à deux entrées $415_1$, $415_2$, $415_3$, ..., $415_m$. L'autre entrée de ces derniers circuits mélangeurs est reliée à la sortie $\pi$ de l'oscillateur 412. Les signaux aux sorties 0 et $\pi$ de cet oscillateur 412 sont déphasés de 180°. A la sortie de chacun de ces circuits mélangeurs $415_1$, $415_2$, $415_3$, ..., $415_m$ est reliée une branche directe et une branche retardatrice du réseau 402. Ces branches portent les références suivantes :

$50_1$ et $54_1$ pour les branches connectées à la sortie du circuit mélangeur $415_1$,
$50_2$ et $54_2$ pour les branches connectées à la sortie du circuit mélangeur $415_2$,
$50_3$ et $54_3$ pour les branches connectées à la sortie du circuit mélangeur $415_3$,
$50_m$ et $54_m$ pour les branches connectées à la sortie du circuit mélangeur $415_m$,
et ces branches sont connectées respectivement aux deux entrées des circuits mélangeurs $52_1$, $52_2$, $52_3$, ..., $52_m$ dont les sorties sont reliées à un circuit sommateur 450. La sortie de ce circuit 450 constitue la sortie du réseau de branches 402. Le circuit de préfiltrage 400 coopère avec l'organe d'estimation de fréquence. Il est prévu pour cela une liaison 455 entre la sortie de cet organe et l'oscillateur 412. Cette liaison agit sur un générateur de pente de tension 458 qui fournit ses signaux de sortie à la commande par tension de l'oscillateur 412. Ce générateur est représenté en détail à la figure 12. Il est constitué essentiellement d'une part par un générateur de courant 460 programmable par l'information véhiculée par une liaison 455 et d'autre part par un condensateur 462 ; c'est la tension à ses armatures qui est appliquée à la commande de fréquence par tension à l'oscillateur 412. Le générateur de courant 460 est formé par un transistor 465 dont la base reçoit une tension fixe $V_{ref}$ et dont l'émetteur est relié via un commutateur 468 à un réseau de résistances 470. L'information numérique véhiculée par la ligne 455 sert à positionner le commutateur 468 et de là à définir la valeur du courant débité par le générateur 460. Les éléments de ce générateur de pente 458 sont choisis de telle manière que le signal SV à la sortie 0 de l'oscillateur 412 s'écrit :

$$SV = k_V \sin(\omega_f + \hat{\Omega}t)t + \Phi'$$

où $k_V$, $\omega_f$ et $\Phi'$ sont des constantes, $\hat{\Omega}$ étant dérivé de la valeur de $\Omega$ estimée par l'organe 60.

Pour expliquer le fonctionnement de ce circuit de préfiltrage 400, on se reporte à la figure 13 ; sur cette

figure 13 de $\underline{a}$ jusqu'en $\underline{d}$ on a représenté les signaux dans un espace fréquence-temps du même type que celui montré en $\underline{a}$ à la figure 3.

En $\underline{a}$ à la figure 13 on a représenté trois traits TR1, TR2 et TR3 correspondant aux signaux à l'entrée du circuit de préfiltrage 400.

On admet que seul le trait TR2 apporte une contribution pour déterminer $\Omega$ c'est-à-dire que les autres traits sont relatifs à d'autres signaux qui n'évoluent pas de la même manière que le signal correspondant à TR2. Après passage dans le modulateur 410, les différents traits sont devenus quasiment horizontaux. En théorie le trait TR2 par exemple pourrait être horizontal si la vitesse V est parfaitement estimée ou ne changeait pas entre l'instant où la valeur $\Omega$ est déterminée par l'organe 60 et l'instant où le signal correspondant à TR2 est reçu. A la sortie de $405_2$ par exemple les autres signaux définis par TR1 et TR3 ne seront pas transmis par ce filtre de même que $405_3$ ne transmettra que TR2 car les fréquences TR1, TR2, TR3... sont suffisamment espacées. C'est ce qui est représenté en $\underline{c}$ à la figure 13 pour TR2. Puis la référence $\underline{d}$ de la figure 13 indique que par exemple seul le signal défini par TR2 sortira de $405_2$, les autres ayant donc été éliminés.

Un tel circuit de préfiltrage 400 peut s'adapter pour des signaux en quadrature, soient :
R(t) et R⊥(t), ces signaux étant élaborés par le circuit récepteur 25 (voir figure 5).

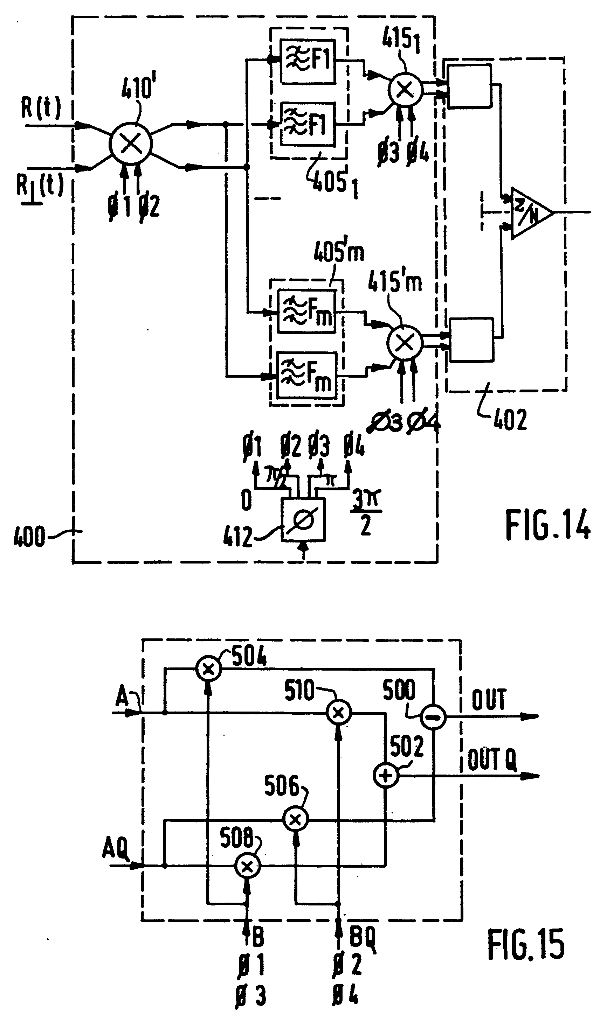

Pour cela les circuits mélangeurs $410'$, $415'_1$, $415'_m$, correspondant aux mélangeurs 410, $415_1$,..., $415_{m'}$, ont une structure qui est montrée à la figure 14. Les filtres $405'_1$, ..., $405'_m$ sont dédoublés de façon à pouvoir filtrer les deux signaux disponibles à la sortie du circuit mélangeur $410'$. Les réseaux de branches aux sorties des circuits mélangeurs peuvent fournir des branches 50 et 54 montrées à la figure 5 par exemple. L'oscillateur 412 fournit des signaux $\Phi1$, $\Phi2$, $\Phi3$, $\Phi4$ déphasés respectivement de 0°, 90°, 180° et 270°. Les signaux $\Phi1$ et $\Phi2$ sont appliqués au circuit mélangeur $410'$ et les signaux $\Phi3$ et $\Phi4$ aux circuits mélangeurs $415'_1$, ..., $415'_m$.

Les circuits mélangeurs $410'$, $415'_1$, ..., $415'_m$ dont le détail de réalisation est montré à la figure 15 comportent des accès A et AQ pour les signaux à traiter et des accès B et BQ pour les signaux de mélange. Les accès A et AQ reçoivent les signaux R(t) et R⊥(t) pour le circuit mélangeur $410'$ et les signaux de sortie des filtres $405'_1$, ..., $405'_m$ pour les circuits mélangeurs $415'_1$, ..., $415'_m$. Les accès B et BQ reçoivent les signaux $\Phi1$ et $\Phi2$ pour le circuit mélangeur $410'$ et les signaux $\Phi3$ et $\Phi4$ pour les circuits mélangeurs $415'_1$,..., $415'_m$. Ces circuits mélangeurs comportent des sorties OUT et OUTQ qui sont reliées aux entrées des filtres $405'_1$,..., $405'_m$ pour le circuit $410'$ et qui sont reliées au réseau de branches 402.

La sortie OUT est constituée par la sortie d'un organe de soustraction 500 et la sortie OUTQ par la sortie d'un organe de sommation 502. Une première entrée de l'organe 500 est connectée à la sortie d'un circuit mélangeur élémentaire 504 et une deuxième entrée de ce même organe 500 est connectée à la sortie d'un deuxième circuit mélangeur élémentaire 506. Une première entrée de l'organe 502 est reliée à la sortie d'un troisième circuit mélangeur élémentaire 508, une autre entrée à la sortie d'un quatrième circuit mélangeur 510. L'entrée B est reliée à une entrée des circuits mélangeurs 504 et 508, l'entrée BQ à une entrée des circuits mélangeurs 506 et 510. L'entrée A est reliée à l'autre entrée des circuits mélangeurs 504 et 510 et l'entrée AQ à l'autre entrée des circuits mélangeurs 506 et 508.

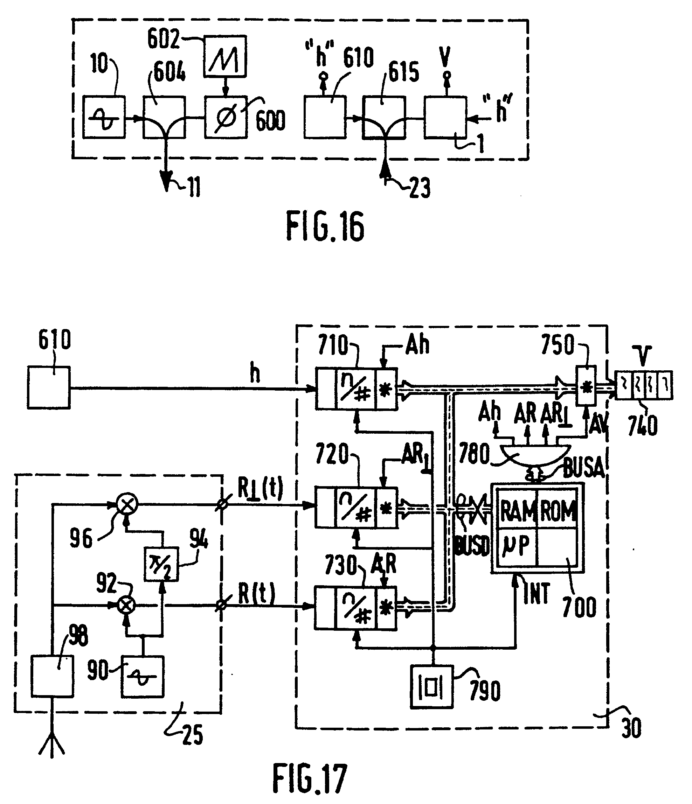

Un dispositif conforme à l'invention montré à la figure 16 comporte des moyens pour donner une valeur à "h". Dans l'exemple d'application de radionavigation précité, ces moyens sont constitués par un radioaltimètre d'un type à modulation linéaire de fréquence ; on pourra consulter à ce sujet le brevet français N° 1 557 670. Ce radioaltimètre comporte une partie émission formée d'un oscillateur 600 modulé linéairement en fréquence par un générateur de signaux en dents de scie 602. Un circuit de couplage 604 permet à l'antenne 11 d'émettre simultanément les signaux fournis par le générateur 10 et l'oscillateur 600. La partie réception 610 du radioaltimètre est branchée à la sortie d'un circuit de couplage 615 ; ceci permet d'utiliser la même antenne 23 pour le dispositif de mesure de vitesse et pour le radioaltimètre. La valeur "h" établie par la partie réception 610 permet de définir la vitesse V selon la formule (4).

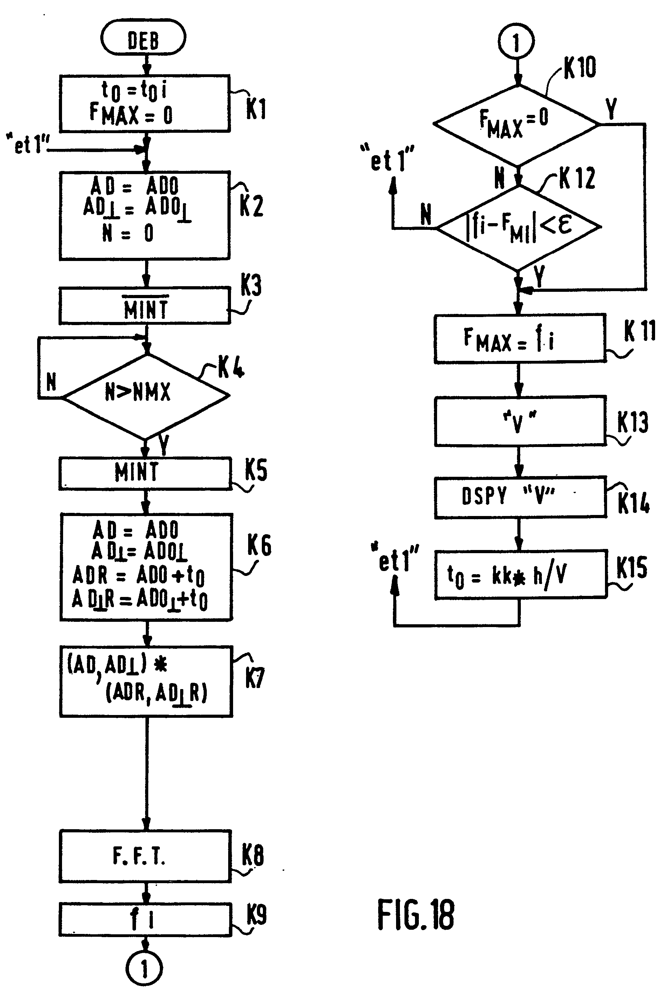

La figure 17 montre l'exemple de réalisation préférée de l'invention. Pour cet exemple on utilise le circuit récepteur 25 qui fournit les signaux R(t) et R⊥(t) et la partie réception 610 d'un radioaltimètre telle que décrit pour la figure 16 et qui fournit la valeur "h" sous forme analogique numérique où comme cela est décrit dans le brevet précité cette valeur "h" peut aussi se présenter sous forme numérique. Les signaux h, R(t) et R⊥(t) sont appliqués au circuit de traitement 30 constitué à partir d'un ensemble à microprocesseur 700. Cet ensemble est formé de la manière la plus conventionnelle par un microprocesseur (par exemple le TMS 320 fabriqué par TEXAS INSTRUMENT), d'une mémoire vive et d'une mémoire ROM pour contenir les instructions qui régissent le fonctionnement du microprocesseur et aussi pour contenir différentes constantes utiles pour ce fonctionnement. Cet ensemble communique avec l'extérieur au moyen de la ligne de données BUSD et de la ligne pour codes d'adresse BUSA et ici on utilise l'entrée INT qui, lorsqu'un signal de valeur logique convenable lui est appliqué, peut provoquer une interruption (interruption masquable). La ligne BUSD est connectée à la sortie de trois ensembles de codeur analogique-numérique 710, 720 et 730. Ces ensembles sont formés chacun d'un échantillonneur-bloqueur, d'un convertisseur analogique-numérique proprement dit et d'un amplificateur à trois états. Pour "h" analogique l'ensemble 710 est utilisé pour le codage de "h", l'ensemble 730 pour le codage de R(t). La ligne BUSD est aussi connectée à un ensemble de visualisation 740 par l'intermédiaire d'un ensemble d'amplification à trois états 750. Un ensemble de décodage 780 connecté à la ligne BUSA permet de sélectionner les ensembles 710, 720, 730 et 750 en faisant apparaître un signal actif sur l'une des lignes Ah, AR⊥, AR et AV. Une base de temps 790 fournit des signaux aux ensembles 710, 720 et 730 pour fixer la période d'échantillonnage des grandeurs R⊥(t) et R(t). Bien que le signal "h" soit échantillonné à la même fréquence un seul échantillon parmi un nombre NMAX sera considéré, comme cela sera expliqué par la suite. Les signaux de la base de temps sont aussi appliqués à l'entrée INT de l'ensemble 700.

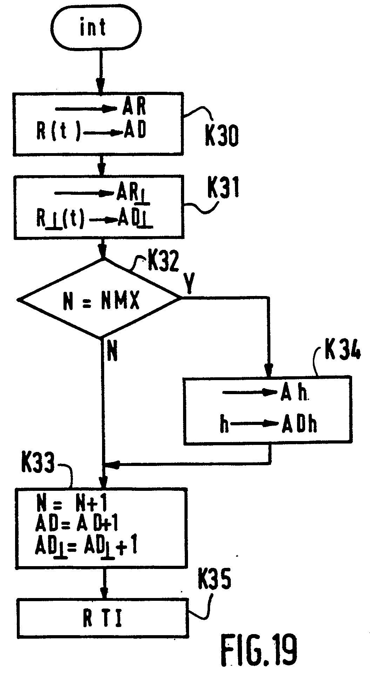

Le fonctionnement de cet exemple de réalisation préféré est expliqué à l'aide des ordinogrammes des figures 18 et 19, qui montrent la façon dont est réalisé le programme contenu dans la mémoire ROM de l'ensemble 700.

La case repérée par la référence K1 montre la phase d'initialisation. On a distingué deux valeurs à initialiser : la première est $t_0$ (représentant le retard apporté par les branches retardatrices) et la deuxième est la valeur de la fréquence où l'on a trouvé une valeur maximale de niveau soit $F_{MAX}$. Il va de soi qu'ici on ne spécifie pas l'adresse mémoire où sont rangées ces valeurs. La case K2 représente une phase d'initialisation pour des pointeurs de mémoire AD et AD⊥ destinés à adresser les échantillons de R(t) et R⊥(t) respectivement. On initialise aussi une valeur N représentant le numéro des couples d'échantillons de R(t) et R⊥(t). On notera qu'entre la case K1 et la case K2 il y a un point de branchement de programme "et1". A la case K3 on représente l'inhibition du masque, c'est-à-dire que tout signal actif sur l'entrée INT provoquera l'exécution du programme d'interruption dont l'ordinogramme est montré à la figure 19. A la case K4 on teste la valeur N tant que celle-ci n'a pas atteint la valeur assignée NMX, on reboucle le test de sorte que les interruptions puissent faire évoluer la valeur N. Lorsque le test est positif on passe à la case K5 où l'on masque l'interruption, c'est-à-dire que les signaux actifs sur l'entrée INT ne provoqueront plus d'interruption dans la suite du programme. A la case K6 on initialise à nouveau les pointeurs AD et AD⊥ et aussi deux autres pointeurs ADR et AD⊥R qui sont décalés des précédents d'une quantité dépendant de $t_0$. A la case K7 on effectue une multiplication complexe correspondant à

$$[R(t) + jR⊥(t)].[R(t-t_0) + jR⊥(t-t_0)].$$

Les différents résultats complexes de multiplication sont ensuite rangés en mémoire, de préférence aux endroits indiqués par AD et AD⊥, augmentés d'une valeur telle que les résultats de la multiplication ne viennent pas se substituer à des échantillons déjà emmagasinés.

Puis les échantillons résultant de la multiplication subissent la transformée de Fourier rapide indiquée à la case K8. Pour cette opération de transformée de Fourier rapide, on pourra se reporter au document publié par la société TEXAS INSTRUMENT intitulé SIGNAL PROCESSING WITH THE TMS 320 notamment à l'article de la page 21 "Signal-processing µC builds FFT band spectrum analyzer". On détermine ensuite la fréquence "$f_i$" où l'on a obtenu le niveau maximum (case K9).

A la case K10 on teste le contenu de la valeur $F_{MAX}$ : si celle-ci est nulle ce qui correspond à la première détermination de fréquence, la valeur $F_{MAX}$ va prendre la valeur "$f_i$" case K11 ; si la valeur $F_{MAX}$ n'est pas nulle on teste (case K12) si la valeur "$f_i$" est compatible avec la valeur mesurée précédemment, c'est-à-dire que l'on fait, comme indiqué, la différence entre ces deux valeurs et on la teste par rapport à une valeur $\varepsilon$ de tolérance. Si le test indiqué à la case K12 est négatif on va au branchement de programme "et1". Si le même test est positif on va à la case K11. A la case K13 on calcule la valeur V selon la formule (4) déjà indiquée puis cette valeur est affichée (case K14) sur l'afficheur 740. Enfin, pour que le fonctionnement soit bien adapté aux différentes vitesses et aux différentes altitudes "h", la valeur $t_0$ est corrigée selon la formule indiquée à la case K15. Soit $t_0$ = (kk.h)/V où kk est une constante. Puis, on retourne au point de branchement "et1".

L'ordinogramme de la figure 19 montre comment est réalisé le programme d'interruption. La case K30 indique la façon dont l'échantillon R(t) est prélevé (on active le signal AR) et comment il est rangé en mémoire en un emplacement indiqué par le pointeur AD. La case K31 indique les mêmes opérations pour l'échantillon R⊥(t) : activation du signal AR⊥ et rangement par le pointeur AD⊥ ; à la case K32 on teste si celle-ci a la valeur NMX ; si c'est non on passe à la case K33 où l'on incrémente les valeurs de N et du contenu des pointeurs AD et AD⊥. Si la valeur N = NMX, on passe à la case K34 où l'on vient charger la valeur de "h" par activation de "h" et on la range à une adresse ADh. La case K35 indique que l'on revient au programme principal dont l'ordinogramme est représenté à la figure 18.

Pour fixer les idées on donne la valeur de quelques paramètres.

La fréquence $f_l$ de l'oscillateur 94 est choisie pour que la fréquence du signal à la sortie du circuit récepteur soit comprise entre 100 Hz et 10 kHz. La fréquence de la base de temps 790 est 20 kHz.

$t_{ol} = 5$ ms

$\lambda = 4$ cm

NMX = 1024

La transformée de Fourier est un transformateur de 1024 bits.

## Revendications

1. Dispositif pour mesurer la vitesse V de défilement d'une surface placée à une distance "h" par rapport à lui, dispositif comportant un circuit émetteur constitué par un oscillateur à fréquence fixe, pour diriger au moyen d'une antenne d'émission une onde vers cette surface, un circuit récepteur pour recevoir l'onde renvoyée par la surface et un circuit de traitement de l'onde renvoyée pour fournir l'indication de la vitesse, caractérisé en ce que le circuit récepteur est associé à une seule antenne de réception pour fournir un signal de réception, en ce que le circuit de traitement est muni de deux branches l'une dite branche directe pour appliquer le signal de réception à une entrée d'un organe de multiplication, l'autre dite branche retardatrice pour appliquer le signal de réception à l'autre entrée de l'organe de multiplication après lui avoir apporté un retard $t_0$ compté par rapport à la branche directe, un organe d'estimation de la fréquence du signal de sortie de l'organe de multiplication et un organe de calcul pour fournir l'indication de vitesse à partir du signal de sortie de l'organe d'estimation et de la distance "h".

2. Dispositif pour mesurer la vitesse de défilement selon la revendication 1, caractérisé en ce que la branche directe est formée d'une connexion directe et en ce que la branche retardatrice est formée d'un organe de retard.

3. Dispositif pour mesurer la vitesse de défilement selon la revendication 1, caractérisé en ce que la branche directe est formée d'une connexion directe et en ce que la branche retardatrice est formée par un montage en cascade comportant un organe de retard et un organe de déplacement de fréquence fixe pour ajouter une valeur de fréquence à la fréquence du signal de réception.

4. Dispositif pour mesurer la vitesse de défilement selon la revendication 1, caractérisé en ce que la branche directe comporte un organe de déplacement de fréquence fixe pour ajouter une valeur de fréquence à la fréquence du signal de réception et en ce que la branche retardatrice est formée d'un organe de retard.

5. Dispositif pour mesurer la vitesse de défilement selon les revendications 1 à 4, caractérisé en ce que le dispositif muni en outre d'un circuit de préfiltrage monté entre la sortie du circuit récepteur et l'organe d'estimation de la fréquence, ce circuit de préfiltrage étant formé d'un modulateur d'entrée pour diminuer la variation de fréquence du signal de sortie du circuit récepteur, d'un banc de filtrespasse-bande et d'un modulateur de sortie pour rétablir ladite variation de fréquence, tandis que les branches directe et retardatrice sont montées en réseau pour être connectées à la sortie de chacun des filtres passe-bande.

6. Dispositif pour mesurer la vitesse de défilement selon les revendications 1 à 5, caracterisé en ce que l'organe d'estimation de la fréquence est un transformateur de Fourier.

7. Dispositif pour mesurer la vitesse de défilement selon les revendications 1 à 5, caractérisé en ce que l'organe d'estimation est formé d'un transformateur de Fourier pour coopérer avec un compteur monté en fréquencemètre et pour commander un filtrage des signaux à appliquer à ce compteur.

8. Dispositif pour mesurer la vitesse de défilement selon la revendication 7 ou 6 pour lequel le signal appliqué à l'organe d'estimation est formé de deux signaux en quadrature, caractérisé en ce que l'organe d'estimation comporte un circuit de normalisation monté en amont du transformateur de Fourier et formé d'un diviseur d'un des signaux en quadrature par un signal représentant la racine carrée de la somme des carrés de ces deux signaux en quadrature.

9. Dispositif pour mesurer la vitesse de défilement selon les revendications 1 à 5 pour lequel le signal appliqué à l'organe d'estimation est formé de deux signaux en quadrature, caractérisé en ce que l'organe d'estimation est formé d'un diviseur pour diviser l'un des signaux en quadrature par l'autre signal en quadrature et un circuit de calcul d'Arctg.

10. Dispositif pour mesurer la vitesse de défilement selon les revendications 1 à 9, caractérisé en ce que le dispositif comprend pour établir la valeur "h" un radioaltimètre formé d'une partie émission et d'une partie réception et un circuit de couplage rattaché à chacune des antennes d'émission et de réception pour coupler d'une part la partie émission avec le circuit émetteur et d'autre part la partie réception avec le circuit récepteur.

11. Dispositif pour mesurer la vitesse de défilement selon les revendications 1 à 10, caractérisé en ce que le dispositif comprend des moyens pour ajuster la valeur $t_0$ de la branche retardatrice en fonction des valeurs V, h notamment.

12. Procédé pour la mise en oeuvre d'un dispositif de mesure de la vitesse de défilement d'une surface par rapport audit dispositif, ledit dispositif étant placé à une distance "h" de cette surface et étant constitué par un circuit et une antenne d'émission (10), un circuit (25) et une antenne (23) unique de réception, des moyens de transformation (710, 720, 730) en échantillons numériques, un circuit de traitement à microprocesseur (700) et à mémoires et des moyens de sortie (740), le procédé comportant une étape d'émission à fréquence fixe d'une onde vers ladite surface au moyen du circuit et de l'antenne d'émission (10), une étape de réception par le circuit et l'antenne unique de réception (23, 25) de l'onde renvoyée par cette surface pour fournir un signal de réception, ledit procédé étant caractérisé en ce qu'il comporte en outre une étape de détermination de signaux donnant la valeur de la distance "h", une étape de transformation par les moyens de transformation en échantillons numériques des signaux de réception et des signaux de valeur "h", une étape de traitement des échantillons numériques par le circuit à microprocesseur et une étape d'indication de la vitesse par les moyens de sortie, l'étape de traitement comprenant les pas suivants:

pas 1 – stockage des échantillons des signaux de réception dans la mémoire,

pas 2 – multiplication d'un desdits échantillons disposé à une première adresse avec un autre desdits échantillons disposé à une deuxième adresse, les deux adresses étant décalées d'une valeur "$t_0$" correspondant à un temps de retard donné de réception des signaux renvoyés par ladite surface,

pas 3 – rangement en mémoire des échantillons résultats de la multiplication,

pas 4 – analyse des échantillons de multiplication par transformée de Fourier notamment,

pas 5 – calcul de la vitesse V de défilement à partir de la valeur de fréquence résultant de l'analyse par transformée de Fourier et de la valeur de distance "h" et fourniture de la valeur V aux moyens de sortie,

pas 6 – réajustage de la valeur $t_0$ en fonction des valeurs de vitesse V et de distance "h" et retour au pas 1.

## Ansprüche

1. Anordnung zum Messen der Geschwindigkeit V gegenüber einer in einem Abstand "h" entfernt liegenden Fläche, wobei diese Anordnung eine aus einem Festfrequenzoszillator bestehende Sendeschaltung aufweist, um mittels einer Sendeantenne dieser Fläche eine Welle zuzuführen, eine Empfangsschaltung zum Empfangen der an der Fläche zurückgeworfenen Welle, sowie eine Verarbeitungsschaltung für die zurückgeworfene Welle zum Liefern der Geschwindigkeitsanzeige, dadurch gekennzeichnet, daß die Empfangsschaltung mit einer einzigen Empfangsantenne versehen ist zum Liefern eines Empfangssignals, daß die Verarbeitungsschaltung mit zwei Zweigen versehen ist, wobei der eine, als direkter Zweig bezeichnete Zweig zum Zuführen des Empfangssignals zu einem Eingang eines Multiplizierelementes dient und der andere, als Verzögerungszweig bezeichnete Zweig zum Zuführen des Empfangssignals zu dem anderen Eingang des Multiplzierelementes dient, nachdem dieses Signal einer Verzögerung $t_0$ gegenüber dem aus dem direkten Zweig ausgesetzt worden ist, weiterhin ein Element zum Schätzen der Frequenz des Ausgangssignals des Multiplizierelementes und ein Rechenelement zum Liefern der Geschwindigkeitsanzeige, ausgehend von dem Ausgangssignal des Schätzungselementes und des Abstandes "h".

2. Anordnung zum Messen der Geschwindigkeit nach Anspruch 1, dadurch gekennzeichnet, daß der direkte Zweig aus einer direkten Verbindung und der Verzögerungszweig aus einer Verzögerungsschaltung besteht.

3. Anordnung zum Messen der Geschwindigkeit nach Anspruch 1, dadurch gekennzeichnet, daß der direkte Zweig aus einer direkten Verbindung und der Verzögerungszweig aus einer Reihenschaltung aus einem Verzögerungselement und einem Festfrequenzschieber zum Addieren eines Frequenzwertes zu der Frequenz des Empfangssignals besteht.

4. Anordnung zum Messen der Geschwindigkeit nach Anspruch 1, dadurch gekennzeichnet, daß der direkte Zweig einen Festfrequenzschieber aufweist zum Addieren eines Frequenzwertes zu der Frequenz des Empfangssignals, und daß der Verzögerungszweig aus einer Verzögerungsanordnung besteht.

5. Anordnung zum Messen der Geschwindigkeit. nach Anspruch 1 bis 4, dadurch gekennzeichnet, daß die Anordnung weiterhin mit einer zwischen dem Ausgang der Empfangsanordnung und dem Frequenzschätzungselement vorgesehenen Vorfilteranordnung versehen ist, die aus einem Eingangsmodulator zum Verringern der Frequenzschwankung des Ausgangssignals der Empfangsanordnung, aus einer Bandpaßfilterbank, sowie aus einem Ausgangsmodulator zum Zurükbilden der genannten Frequenzschankung besteht, während der direkte und der Verzögerungszweig in einem Netzwerk vorgesehen sind zur Verbindung mit dem Ausgang jedes der Bandpaßfilter.

6. Anordnung zum Messen der Geschwindigkeit nach Anspruch 1 bis 5, <u>dadurch gekennzeichnet</u>, daß das Frequenzschätzungselement ein Fourier-Transformator ist.

7. Anordnung zum Messen der Geschwindigkeit nach Anspruch 1 bis 5, <u>dadurch gekennzeichnet</u>, daß das Schätzungselement aus einem Fourier-Transformator besteht zum Zusammenarbeiten mit einem als Frequenzmesser vorgesehenen Rechner und zum Steuern einer Filterung der diesem Rechner zuzuführenden Signale.

8. Anordnung zum Messen der Geschwindigkeit nach Anspruch 7 oder 6, für die das dem Schätzungselement zugeführte Signal aus zwei Quadratursignalen gebildet ist, <u>dadurch gekennzeichnet</u>, daß das Schätzungselement eine vor dem Fourier-Transformator angeordnete Normalisierungsschaltung aufweist, die aus einem Teiler besteht zum Teilen eines der Quadratursignale durch ein Signal, das die Quadratwurzel der Summe der Quadrate der zwei Quadratursignale darstellt.

9. Anordnung zum Messen der Geschwindigkeit nach Anspruch 1 bis 5, für die das dem Schätzungselement zugeführte Signal aus zwei Quadratursignalen besteht, <u>dadurch gekennzeichnet</u>, daß das Schätzungselement aus einem Teiler besteht zum Teilen eines der Quadratursignale durch das andere Quadratursignal, sowie aus einer Arctg-Rechenanordnung besteht.

10. Anordnung zum Messen der Geschwindigkeit nach Anspruch 1 bis 9, <u>dadurch gekennzeichnet</u>, daß sie zum Bestimmen des Wertes "h" einen Funkhöhenmesser mit einem Sendeteil und einem Empfangsteil, sowie einen mit jeder der Sende- und der Empfangsantennen verbundenen Koppelkreis aufweist um einerseits den Sendeteil mit der Sendeanordnung und andererseits den Empfangsteil mit der Empfangsanordnung zu koppeln.

11. Anordnung zum Messen der Geschwindigkeit nach Anspruch 1 bis 10, <u>dadurch gekennzeichnet</u>, daß sie Mittel aufweist zum insbesondere in Abhängigkeit der Werte V, h Einstellen des Wertes $t_0$ des Verzögerungszweiges.

12. Verfahren zum Durchführen der Wirkung einer Anordnung zum Messen der Geschwindigkeit einer Fläche gegenüber der genannten Anordnung, wobei diese Anordnung sich in einem Abstand "h" von dieser Fläche befindet und aus einer Sendeanordnung und einer Sendeantenne (10), einer Empfangsanordnung (25) und einer einzigen Empfangsantenne (23), aus Transformationsmitteln (710, 720, 730) für digitale Abtastwerte, aus einer Verarbeitungsschaltung mit einem Mikroprozessor (700) und mit Speichern, sowie aus Ausgangsmitteln (740) besteht, wobei das Verfahren die folgenden Verfahrensschritte aufweist, einen Sendeschritt zum mit einer Festfrequenz Aussenden einer Welle zu der genannten Fläche mittels einer Sendeanordnung und einer Sendeantenne (10), einen Empfangsschritt zum Empfangen mittels der Empfangsschaltung und der einigen Empfangsantenne (23, 25) der an der genannten Fläche zurückgeschickten Welle zum Liefern eines Empfangssignals, wobei dieses Verfahren das Kennzeichen aufweist, daß es weiterhin einen Schritt aufweist zum Bestimmen von Signalen, die den Wert des Abstandes "h" liefern, einen Schritt zum Umwandeln der digitalen Abtastwerte der Empfangssignale und der Signale mit dem Wert "h" mit Hilfe der Transformationsmittel, einen Schritt zum Verarbeiten der digitalen Abtastwerte mit Hilfe des Mikroprozessors und einen Schritt zum Anzeigen der Geschwindigkeit mit Hilfe der Ausgangsmittel, wobei der Verarbeitungsschritt die folgenden Teilschritte aufweist :

.Schritt 1 – das Speichern der Abtastwerte der Empfangssignale in dem Speicher,

Schritt 2 – das Multiplizieren eines der genannten Abtastwerte auf einer ersten Adresse mit einem anderen der genannten Abastwerte auf einer zweiten Adresse, wobei die beiden Adressen um einen Wert "$t_0$" entsprechend einer Zeitverzögerung durch den Empfang der an der genannten Fläche reflektierten Signale verschoben sind ;

Schritt 3 – das in dem Speicher Gliedern der durch den Multipliziervorgang erhaltenen Abtastwerte ;

Schritt 4 – das Analysieren der Multiplikationssbtastwerte insbesondere durch Fourier-Transformation;

Schritt 5 – das Berechnen der Geschwindigkeit V aus dem Frequenzwert als Ergebnis der Analyse durch Fourier-Transformation und aus dem Wert des Abstandes "h" sowie das Liefern des Wertes V zu den Ausgangsmitteln ;

Schritt 6 – das Neueinstellen des Wertes $t_0$ in Abhängigkeit von den Werten der Geschwindigkeit V und des Abstandes "h" und das Zurükkehren zu dem Schritt 1.

## Claims

1. Arrangement for measuring the relative velocity V with respect to a surface placed at a distance "h" therefrom, the arrangement comprising a transmitting circuit formed by a fixed-frequency oscillator for directing a wave towards that surface by means of a transmitting aerial, a receiving circuit for receiving by means of at least one receiving aerial the wave returned by the surface and a circuit for processing the return wave for producing the indication of the velocity, characterized in that the receiving circuit is associated with a single receiving aerial for producing a received signal, in that the processing circuit has two branches one, the so-called direct branch for applying the received signal to an input of a multiplier member, the other, the so-called delay branch for applying the received signal to the other input of the multiplying member after the signal has been subjected to a delay $t_0$ relative to the direct branch, a member for estimating the frequency of the multiplying member output signal and a calculating member for producing the indication of the velocity from the estimating member output signal and of the distance "h".

2. Arrangement for measuring the relative velocity as claimed in Claim 1, characterized in that the direct branch is formed by a direct connection and in that the delay branch is formed by a delay member.

3. Arrangement for measuring the relative velocity as claimed in Claim 1, characterized in that the direct branch is formed by a direct connection and in that the delay branch is formed by a cascade arrangement comprising a delay element and a fixed frequency shift member for adding a frequency value to the frequency of the received signal.

4. Arrangement for measuring the relative velocity as claimed in Claim 1, characterized in that the direct branch comprises a fixed frequency shift member for adding a frequency value to the frequency of the received signal and in that the delay branch is formed by a delay member.

5. Arrangement for measuring the relative velocity as claimed in Claims 1 to 4, characterized in that it is furthermore provided with a prefiltering circuit arranged between the output of the receiving circuit and the frequency estimating member, this prefiltering circuit being constituted by an input modulator for reducing the frequency variations of the output signal of said receiving circuit, a bandpass filter bank and an output modulator for re-establishing said frequency variation, whilst the direct and delay branches are arranged in a network for connection to the output of each of the bandpass filters.

6. Arrangement for measuring the relative velocity as claimed in Claims 1 - 5, characterized in that the frequency estimating member is a Fourier transformer.

7. Arrangement for measuring the relative velocity as claimed in Claims 1 - 5, characterized in that the estimating member is constituted by a Fourier transformer for cooperation with a counter arranged as a frequency meter and for controlling filtering of the signals applied to this counter.

8. Arrangement for measuring the relative velocity as claimed in Claim 7 or 6, for which the signal applied to the estimating member is formed from two quadrature signals, characterized in that the estimating member comprises a normalisation circuit provided upstream of the Fourier transformer and constituted by a divider dividing the quadrature signals by a signal representing the sum of the squares of these two quadrature signals.

9. Arrangement for measuring the relative velocity as claimed in Claims 1 - 5, for which the signal applied to the estimating member is formed from two quadrature signals, characterized in that the estimating member is constituted by a divider for dividing one of the quadrature signals by the other quadrature signal and a Arctan calculating circuit.

10. Arrangement for measuring the relative velocity as claimed in Claims 1 - 9, characterized in that for establishing the value "h" the arrangement comprises a radioaltimeter formed by a transmit portion and a receive portion and in that a coupling circuit connected to each of the transmission and receiving antennas is provided for coupling the transmit portion to the emitter circuit and also the receive portion to the receiving circuit.

11. Arrangement for measuring the relative velocity as claimed in Claims 1 to 10, characterized in that the arrangement comprises means for adjusting the value $t_0$ of the delay branch versus the values V, more specifically h.

12. Method of utilising an arrangement for measuring its relative velocity with respect to a surface, said arrangement being placed at a distance "h" from this surface and being formed by a transmitting circuit and a transmitting aerial (10), a receiving circuit (25) and a single receiving aerial, means for transforming signals into digital samples (710, 720, 730), a processing circuit comprising a microprocessor (700) and memories and output means (740), the method comprising a stage of transmitting at a fixed frequency a wave towards said surface by means of the transmitting circuit and the transmitting aerial (10), a stage of receiving via the receiving circuit and the single receiving aerial (23, 25) the wave returned by this surface to produce a received signal, said method being characterized in that it further includes a stage of determining the signals producing the value of the distance "h", a stage of transforming with the aid of the transforming means received signals and signals having the value "h" into digital samples, a stage of processing the digital samples by the microprocessor circuit and a stage indicating the velocity via output means, the processing stage comprising the following steps :

step 1 – storing the samples of the received signals in the memory,

step 2 – multiplying one of said samples located at a first address by another one of said samples located at a second address, the two addresses being shifted by a value "$t_0$" corresponding to a given receive delay interval of the received signals that have been returned by said surface,

step 3 – arranging in the memory the samples resulting from the multiplication,

step 4 – analysing the samples obtained from the multiplication, more specifically, by Fourier transform,

step 5 – calculating the relative velocity V on the basis of the frequency value obtained from the analysis by means of the Fourier transform and the value of the distance "h" and applying the value V to the output means,

step 6 – readjusting the value $t_0$ as a function of the values of the velocity V and the distance "h" and return to step 1.

FIG.1

FIG.2

FIG.12

EP 0 201 946 B1

FIG.3

15

FIG.4

FIG.9

FIG.10

FIG.5

FIG.6

FIG.7

FIG.8

FIG.11

FIG.13

FIG.14

FIG.15

FIG.16

FIG.17

FIG.18

FIG.19